(19)

Europäisches
Patentamt
European
Patent Office
Office européen
des brevets

(11) **EP 4 546 634 A1**

(12) **EUROPEAN PATENT APPLICATION**

(43) Date of publication:
**30.04.2025  Bulletin 2025/18**

(21) Application number: **23205704.2**

(22) Date of filing: **25.10.2023**

(51) International Patent Classification (IPC):
*H02M 3/335* (2006.01)   *H02M 3/00* (2006.01)
*H02M 1/32* (2007.01)   *H02M 1/00* (2006.01)

(52) Cooperative Patent Classification (CPC):
**H02M 3/01; H02M 1/0025; H02M 1/0058;**
**H02M 1/32; H02M 3/33571; H02M 3/33576;**
H02M 3/3376

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **NXP USA, Inc.**
**Austin TX 78735 (US)**

(72) Inventors:
• **RENS, Frank van**
**5656 AG Eindhoven (NL)**

• **HALBERSTADT, Hans**
**5656 AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

Remarks:
Amended claims in accordance with Rule 137(2)
EPC.

(54) **A CONTROLLER FOR A RESONANT CONVERTER**

(57)    A controller for a resonant converter. The controller is configured to: compare a measured current signal with a positive current threshold; compare the measured current signal with a negative current threshold; and set a power reduction mode as active if either or both: the measured current signal is less than the positive current threshold at the end of the preceding high-side switch half cycle; and the measured current signal is greater than the negative current threshold at the end of the preceding low-side switch half cycle. While the power reduction mode is active: the controller gradually decreases the value of a reduced power signal. While the power reduction mode is inactive: the controller gradually increases the value of the reduced power signal. the controller sets an upper voltage threshold value and a lower voltage threshold value based on the lower of: i) the reduced power signal; and ii) a power setting signal.

Figure 3b

EP 4 546 634 A1

**Description**

<u>Field</u>

The present disclosure relates to controllers for resonant converter, and associated methods.

<u>Summary</u>

According to a first aspect of the present disclosure there is provided a controller for a resonant converter, wherein the resonant converter is for supplying electrical energy from a supply source to a load, the resonant converter comprising:

a first switch and a second switch connected in series with each other between the supply source and a reference terminal, wherein the resonant converter has a high-side switch half cycle when the first switch is closed and the second switch is open, and wherein the resonant converter has a low-side switch half cycle when the first switch is open and the second switch is closed;
a resonant tank that is electrically connected to the first and second switches, wherein the resonant tank comprises a resonant capacitor; wherein the controller is configured to:
receive a measured current signal that represents the current flowing in the resonant tank;
receive a measured voltage signal that represents the voltage at a predetermined point in the resonant tank;
receive a power setting signal, which defines a requested power level for the load;
compare the measured current signal with a positive current threshold;
compare the measured current signal with a negative current threshold;
set a power reduction mode as active if either or both:

the measured current signal is less than the positive current threshold at the end of the preceding high-side switch half cycle; and
the measured current signal is greater than the negative current threshold at the end of the preceding low-side switch half cycle;

set the power reduction mode as inactive if both:

the measured current signal is not less than the positive current threshold at the end of the preceding high-side switch half cycle; and
the measured current signal is not greater than the negative current threshold at the end of the preceding low-side switch half cycle;

while the power reduction mode is active: gradually decrease the value of a reduced power signal;
while the power reduction mode is inactive: gradually increase the value of the reduced power signal;
set an upper voltage threshold value and a lower voltage threshold value based on the lower of: i) the reduced power signal; and ii) the power setting signal;
in response to the measured voltage signal exceeding the upper voltage threshold value, open the first switch and close the second switch;
in response to the measured voltage signal dropping below the lower voltage threshold value, open the second switch and close the first switch.

Advantageously, such a controller can adjust the levels of the upper and lower voltage threshold values such that the controller will automatically cause the resonant converter to transition from being controlled based on the level of the measured current signal to being controlled based on the level of the measured voltage signal.
In one or more embodiments, the controller is configured to:
while the power reduction mode is inactive: gradually increase the value of the reduced power signal until the reduced power signal is greater than the power setting signal.
In one or more embodiments, the controller is configured to:
while the power reduction mode is inactive: gradually increase the value of the reduced power signal until the reduced power signal is a predetermined amount greater than the power setting signal.
In one or more embodiments, the controller is configured to:
while the power reduction mode is inactive:

gradually increase the value of the reduced power signal until the reduced power signal is a predetermined amount greater than the power setting signal; and

maintain the value of the reduced power signal at the predetermined amount greater than the power setting signal until the power reduction mode becomes active.

In one or more embodiments: the predetermined amount is either: a predetermined proportion of the power setting signal; or a predetermined absolute amount greater than the power setting signal.

In one or more embodiments, the controller further comprises a timeout timer, wherein the controller is configured to:

start the timeout timer when the power reduction mode is active; and
take remedial action if the timeout timer reaches an end value.

In one or more embodiments, the controller is configured to:

while the power reduction mode is active: gradually decrease the value of the reduced power signal at a first rate of change;
while the power reduction mode is inactive: gradually increase the value of the reduced power signal at a second rate of change; and
wherein the first rate of change is higher than the second rate of change.

In one or more embodiments, the controller is further configured to:

in response to the measured current signal dropping below the positive current threshold value at the end of a high-side switch half cycle, open the first switch and close the second switch;
in response to the measured current signal exceeding the negative current threshold value at the end of a low-side switch half cycle, open the second switch and close the first switch.

In one or more embodiments, the controller is configured to:
in response to the measured voltage signal exceeding the upper voltage threshold value, open the first switch, wait for a delay period, and then close the second switch.

In one or more embodiments, the controller is configured to:
in response to the measured voltage signal dropping below the lower voltage threshold value, open the second switch, wait for a delay period, and then close the first switch.

In one or more embodiments, the controller is further configured to:

receive a protected power signal, which defines a power level that is based on a time delay between a change in state of one of the switches and a subsequent zero-crossing of the measured current signal; and
set the upper voltage threshold value and the lower threshold value based on the lower of: i) the reduced power signal; ii) the power setting signal; and iii) the protected power signal.

In one or more embodiments, the protected power signal corresponds to a power level at which the measured voltage signal will intersect: the upper voltage threshold value during the high-side switch half cycle; and the lower voltage threshold value during the low-side switch half cycle.

There is also disclosed a resonant converter comprising any controller disclosed herein.

According to a further aspect of the present disclosure, there is provided, a method of operating a resonant converter, wherein the resonant converter is for supplying electrical energy from a supply source to a load, the resonant converter comprising:

a first switch and a second switch connected in series with each other between the supply source and a reference terminal, wherein the resonant converter has a high-side switch half cycle when the first switch is closed and the second switch is open, and wherein the resonant converter has a low-side switch half cycle when the first switch is open and the second switch is closed; and
a resonant tank that is electrically connected to the first and second switches, wherein the resonant tank comprises a resonant capacitor;

wherein the method comprises:

receiving a measured current signal that represents the current flowing in the resonant tank;
receiving a measured voltage signal that represents the voltage at a predetermined point in the resonant tank;
receiving a power setting signal, which defines a requested power level for the load;
comparing the measured current signal with a positive current threshold;
comparing the measured current signal with a negative current threshold;
setting a power reduction mode as active if either or both:

the measured current signal is less than the positive current threshold at the end of the preceding high-side switch half cycle; and
the measured current signal is greater than the negative current threshold at the end of the preceding low-side switch half cycle;

setting the power reduction mode as inactive if both:

the measured current signal is not less than the positive current threshold at the end of the preceding high-side switch half cycle; and
the measured current signal is not greater than the negative current threshold at the end of the preceding low-side switch half cycle;

while the power reduction mode is active: gradually decreasing the value of a reduced power signal;
while the power reduction mode is inactive: gradually increasing the value of the reduced power signal;
setting an upper voltage threshold value and a lower voltage threshold value based on the lower of: i) the reduced power signal; and ii) the power setting signal;
in response to the measured voltage signal exceeding the upper voltage threshold value, opening the first switch and closing the second switch;
in response to the measured voltage signal dropping below the lower voltage threshold value, opening the second switch and closing the first switch.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

## Brief Description of the Drawings

One or more embodiments will now be described by way of example only with reference to the accompanying drawings in which:

Figure 1 shows a resonant converter as part of a total power supply;
Figure 2 illustrates the basic principle of capacitor voltage control, with a resonant capacitor at ground side (split-up), for a resonant converter;
Figure 3a shows an example embodiment of a resonant converter, which includes a controller according to the present disclosure;
Figure 3b shows further details of the controller of Figure 3a;
Figure 4 shows another example embodiment of a controller according to the present disclosure; and
Figure 5 shows an example embodiment of a method of operating a resonant converter according to the present disclosure.

## Detailed Description

A resonant power converter can use a half cycle by half cycle switch off mechanism that involves sensing of the resonant capacitor voltage (Vcap) and comparing Vcap to a power reference level of the closed loop operation. This can be referred to as capacitor voltage control. Instead of directly controlling the switches by forcing a switching frequency, the switching frequency results from the Vcap control mechanism.

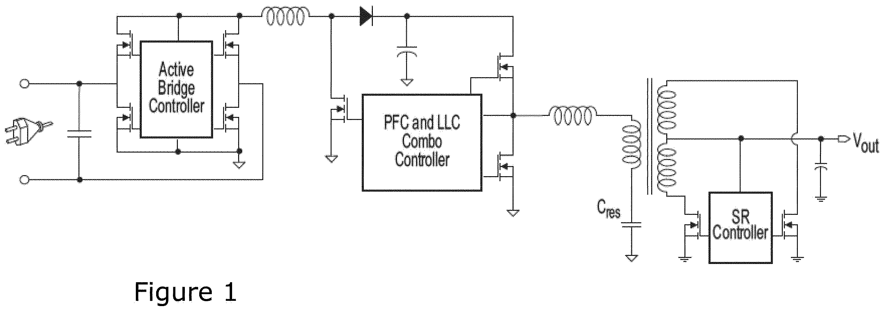

Figure 1 shows a resonant converter as part of a total power supply, which is used in an adapter in this example. The adapter includes the following blocks:

- an active bridge controller (mains rectification);
- a PFC controller part (power factor correction using a boost converter architecture);
- a resonant LLC controller part (drives the half bridge stage plus LLC resonant tank including a tapped winding transformer); and
- an SR controller (synchronous rectifier stage to make a rectified output voltage Vout).

The resonant converter can be dimensioned using first harmonic approximation. Furthermore, controlling the output power using a capacitor voltage control method can provide the following advantages:

- Possibility to use dedicated low power modes.
- Much better dynamics because the delivered power almost instantly follows the setpoint for the resonant tank variables. This simplifies the control loop design.

The resonant converter can have a resonant capacitor in series with the half bridge node, and the information for controlling the switches can be derived from the voltage across the resonant capacitor (the side that is not connected to the half bridge node).

This method actually senses the voltage across the transformer, and therefore the DC component of the sensed signal is zero. In some applications, the high voltage signal at the resonant capacitor / transformer node should be attenuated to a low voltage signal that can be processed by an IC (integrated circuit). For this purpose, a capacitive divider can be used because a resistive divider would give an undesired low pass filtering. Due to the fact that the DC component is zero, no information about the DC component is needed so a capacitive divider (not able to transfer a DC component) is sufficient.

As an alternative, the resonant capacitor can also be placed in the ground branch, in series with the primary coil of the transformer, as shown in Figure 1.

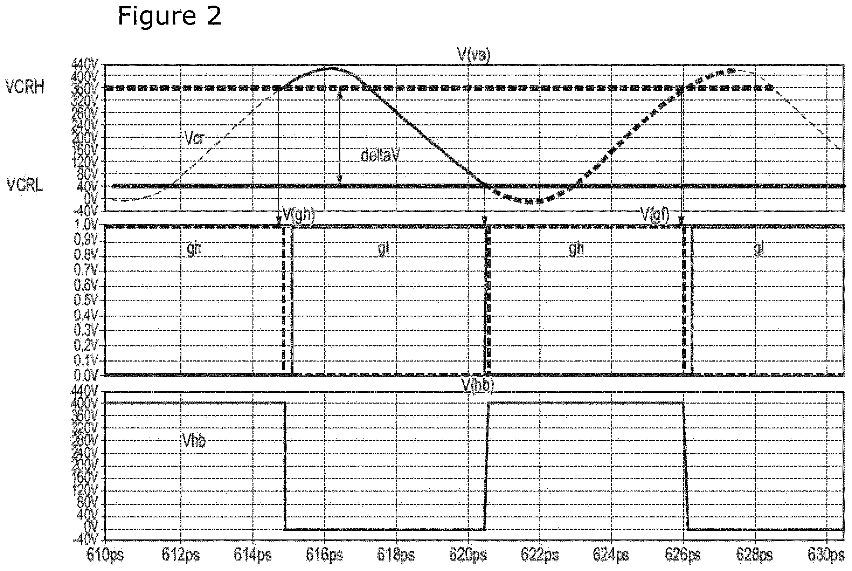

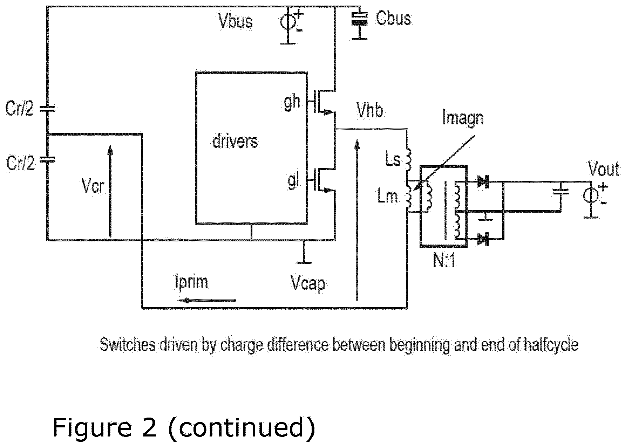

Figure 2 illustrates the basic principle of capacitor voltage control, with a resonant capacitor at ground side (split-up), for a resonant converter. That is, the resonant capacitor is split between ground and a voltage supply (Vbus) in order to reduce ripple currents in the ground and supply path.

Figure 2 also shows the timing control principle for the switches with this implementation.

The resonant converter of Figure 2 includes a controller (not shown), which operates first and second series-arranged, controllable switches. These switches are connected between a supply source (Vbus) and a reference terminal (ground). The controller controls a first, high-side, switch with a signal that is labelled as gh. The controller controls a second, low-side, switch with a signal that is labelled as gl. The voltage at the half-bridge node (the node between the high-side switch and the low-side switch) is labelled as Vhb.

The controller receives a measured voltage signal (Vcr) that represents the voltage at a predetermined point in the resonant tank. In this example, the measured voltage signal (Vcr) represents the voltage across the resonant capacitor. As shown in Figure 2, the controller compares the measured voltage signal (Vcr) with an upper voltage threshold value (VCRH) and a lower threshold value (VCRL). Based on that comparison, a switch half cycle is ended. More particularly, in response to the measured voltage signal (Vcr) exceeding the upper voltage threshold value (VCRH), the second, low-side, switch is closed and the first, high-side, switch is opened. In response to the measured voltage signal (Vcr) dropping below the lower voltage threshold value (VCRL), the second, low-side, switch is opened and the first, high-side, switch is closed. It will be appreciated that the polarity of the signals can be reversed in an alternative implementation such that: the second, low-side, switch is closed and the first, high-side, switch is opened in response to the measured voltage signal (Vcr) dropping below a lower voltage threshold value; and the second, low-side, switch is opened and the first, high-side, switch is closed in response to the measured voltage signal (Vcr) exceeding an upper voltage threshold value. In this example, a non overlap time is implemented after opening one of the switches before the other one is closed. In this way, there is a slight delay between one half cycle ending and the next half cycle starting. For simplicity, the attenuation of the Vcr voltage for the controller IC is not included in Figure 2.

For the plots that are shown in Figure 2, the resonant converter uses an input voltage Vbus of 400V, and therefore Vhb switches between 400V and 0V. For this example:

$$deltaV = 360 - 40 = 320V;$$

$$VCRH = Vbus/2 + deltaV/2 = 200 + 160 = 360V;$$

and

$$VCRl = Vbus/2 - deltaV/2 = 200 - 160 = 40V.$$

gh and gl have an amplitude of 1V, which is a convenient representation for true=1 and false=0.

The setup of Figure 2 also takes the DC component of the resonant capacitor into account. The DC component is defined by the input voltage of the half bridge (Vbus) multiplied by the duty cycle of the half bridge voltage (typically Vbus / 2 at 50% duty cycle operation).

In practice, a capacitive divider cannot represent the DC component of the resonant capacitor due to leakage and a resistive divider cannot reliably attenuate the high frequency part of the Vcr signal due to parasitic capacitances. With a resistive and capacitive divider in parallel it is difficult to keep the same attenuation ratio due to component tolerances. The DC component across a capacitive divider (with optionally a resistive divider in parallel) can be recovered in a practical circuit by adding a so called symmetry loop.

A symmetry loop compares the measured duty cycle with a desired value of 50% and corrects the capacitive divider DC component such that 50% duty cycle is achieved. The switching together with the divider creates a DC component at the divider. This DC component together with the vcrh and vcrl levels defines a duty cycle and symmetry / asymmetry. A DC symmetry loop senses the duty cycle and regulates the DC value such that a 50% duty cycle occurs with symmetrical half cycles. The symmetry loop can rely on finishing each half cycle by Vcr crossing one of the thresholds (VRCH or VCRL) such that a direct dependency remains with the divided resonant capacitor voltage. This includes the DC level and the difference between the two threshold levels (VRCH or VCRL).

We include below a calculation for the converted power of the resonant converter of Figure 2 as a function of deltaV, which is the difference between the two threshold levels VCRH and VCRL (these thresholds can also be referred to as vcaph and vcapl).

- deltaV across Cr between beginning and end of each half cycle => Charge difference

    ○ Power=average current x input voltage=I x Vbus
    ○ I=Q x Fswitch
    ○ Q=Cr x deltaV
    ○ Power=Cr x deltaV x Fswitch x Vbus can be set per switching cycle

It can be seen that the converted energy per switching cycle is directly proportional to deltaV. However, this does not guarantee that this energy can be realized.

When increasing deltaV, the result is that the resonance becomes larger. However a larger resonance also means that the resonant current becomes closer to 0 at the end of each half cycle. The situation where the resonant current becomes zero at the moment that the half cycle is finished is called the 'capacitive mode limit'. As the dv/dt of Vcr is proportional to the resonant current, it is not possible to achieve larger powers because this would mean that VCRH and VCRL from Figure 2 cannot be reached because the peak of the Vcr signal (at the moment that the resonant current crosses 0) is smaller than VCRH or VCRL or both, and after that moment Vcr would start returning back towards zero.

A controller for a resonant converter can control operation of the switches based on the resonant current. For example, two current threshold values can be used: a positive threshold (Iend_pos) and a negative threshold (Iend_neg). Iend_pos and Iend_neg can represent predefined levels for the resonant current such that: a high-side half cycle is finished when the resonant current gets closer to zero than the Iend_pos defined level; and a low-side half cycle is finished when the resonant current gets closer to zero than the Iend_neg defined level. The result is that a half cycle is finished based on a comparison between the resonant current and the current threshold values. This ensures that the system cannot enter the capacitive mode region, which could be destructive for the converter.

It has been found that in some cases, the controller for an LLC resonant converter (i.e., one in which the resonant tank includes two inductors and a capacitor) could get stuck in asymmetrical operation of the half bridge. When this situation occurs the switches (which can be considered as half-bridge (HB) MOSFET's) can hard-switch, become hot and can break down. Also, in applications for adapter and PC power supplies, such asymmetrical drifting away was detected and concluded to be an undesired way of operating.

It can be important that the converter is capable of recovering from dynamic asymmetrical situations. For instance, a situation where the system settles at an undesired asymmetrical solution where one or both half cycles are ended by the resonant current crossing a current threshold should be avoided. In addition, if a symmetry loop is present it should be capable of restoring 50% duty cycle. This can be achieved by both half cycles ending as a result of Vcap control, and if necessary the symmetry loop adapting the DC component of the divided version of the Vcr signal such that then the duty cycle changes when Vcap control occurs for both half cycles. However when only one of the half cycles is ended by Vcap control, this results in an open loop situation for the symmetry loop because changing the DC component has no influence on finishing the half cycle when the Vcap mechanism is not capable of finishing the half cycle.

The examples disclosed herein can address these problems by detecting that one of both of the half cycles are ended by the resonant converter crossing a current threshold, and in response regulating back the power level (by reducing deltaV) until Vcap control takes over again. The result is that the system can recover towards a symmetrical situation, with a desired predefined distance between actual power and maximum power at the capacitive mode limit.

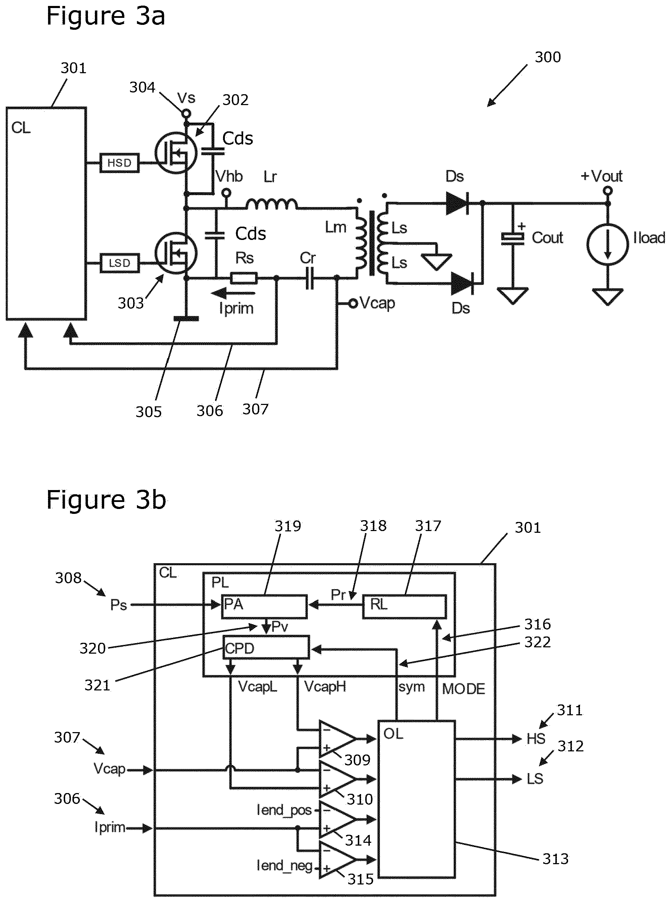

Figure 3a shows an example embodiment of a resonant converter 300, which includes a controller 301 according to the present disclosure. Figure 3b shows further details of the controller 301 of Figure 3a. The resonant converter 300 is for supplying electrical energy from a supply source (Vs) to a load at a secondary side of a transformer.

The resonant converter includes a first switch 302 and a second switch 303 connected in series with each other between the supply source (Vs) 304 and a reference terminal (ground in this example) 305. The resonant converter 300 has a high-side switch half cycle when the first switch 302 is closed and the second switch 303 is open. The resonant converter also has a low-side switch half cycle when the first switch 302 is open and the second switch 303 is closed. The resonant converter 300 also has a resonant tank that is electrically connected to the first and second switches 302, 303. In this example, the resonant tank includes a resonant capacitor (Cr) and two inductors (Lr and Lm, where the resonant inductor Lr is normally defined by the spread inductance of the transformer ), one of which is a primary winding of the transformer. The transformer has a secondary winding that is connected to a secondary side of the resonant converter 300. Therefore, the resonant converter 300 of Figure 3a is an LLC converter (because the resonant tank includes two inductors and a capacitor), although it will be appreciated that examples disclosed herein can be used with different types of resonant converters having different types of resonant tanks.

The controller 301 receives a measured current signal (Iprim) 306, which represents the current flowing in the resonant tank. In this example, the current flowing through the primary transformer winding is sensed to provide the measured current signal (Iprim) 306. However, it will be appreciated that in other examples the current in the resonant tank can be sensed at a different location. The controller 301 also receives a measured voltage signal (Vcap) 307, which represents the voltage at a predetermined point in the resonant tank. In this example, the voltage dropped across the resonant capacitor (Cr) is sensed to provide the measured voltage signal (Vcap) 307. However, it will be appreciated that in other examples the voltage dropped across different components in the resonant tank can be sensed.

As will be discussed below, the controller 301 uses the resonant tank variables Vcap and Iprim to control the timing of the resonant tank.

Figure 3a also shows a parasitic capacitance (Cds) connected in parallel with the half-bridge node and the reference terminal 305. This parasitic capacitance (Cds) is basically the MOSFET Cds capacitance (i.e., the capacitance between the drain and the source of the second switch 303). The first switch 302 has a corresponding parasitic capacitance (Cds), which is also show in Figure 3a. In some applications, an extra capacitance is added in parallel with the parasitic capacitance (Cp) of the second switch 303 and therefore the capacitance is not entirely parasitic. The capacitance level of Cp relates to the energy needed to charge the half-bridge node to the opposite supply rail, and therefore it is partly related to threshold current levels that can be compared with the resonant current to determine if a half cycle should end.

As shown in Figure 3b, the controller 301 also receives a power setting signal (Ps) 308. The power setting signal (Ps) 308 defines a requested power level for the load. In this example, the controller 301 receives the power setting signal (Ps) 308 from another component associated with the resonant converter 300. In another example, the power setting signal (Ps) 308 is generated by the controller 301 itself.

The controller 301 includes a first voltage comparator 309 that compares the measured voltage signal (Vcap) 307 with the upper voltage threshold value (VCRH, which is labelled as VcapH in Figure 3b). The output signal of the first voltage comparator 309 indicates whether or not the measured voltage signal (Vcap) 307 is greater than the upper voltage threshold value (VCRH). The controller 301 also includes logic 313 (identified as output logic (OL)) in Figure 3b) that processes the output signal of the first voltage comparator 309 and provides: a first switch control signal (HS) 311 for setting the state of the first, high-side, switch 302; and a second switch control signal (LS) 312 for setting the state of the second, low-side, switch 303. In this way, the logic 313 can, in response to the measured voltage signal (Vcap) 307 exceeding the upper voltage threshold value (VCRH), open the first switch 302 and close the second switch 303. As described above with reference to Figure 2, this defines the end of a high-side switch half cycle and the beginning of a low-side half cycle. In some applications, the logic 313 can wait for a delay period between opening the first switch 302 and closing the second switch 303 in order to implement a non-overlap delay between the two switching operations and thereby ensure that both switches are not closed at the same time. If this were the case, then the performance of the converter 300 would be degraded.

The controller 301 also includes a second voltage comparator 310 that compares the measured voltage signal (Vcap) 307 with the lower voltage threshold value (VCRL, which is labelled as VcapL in Figure 3b). The output signal of the second voltage comparator 310 indicates whether or not the measured voltage signal (Vcap) 307 is less than the lower voltage threshold value (VCRL). The logic 313 processes the output signal of the second voltage comparator 310 in order to set the values of the first switch control signal (HS) 311 and the second switch control signal (LS) 312. In this way, the logic 313 can, in response to the measured voltage signal (Vcap) 307 dropping below the lower voltage threshold value (VCRL), open the second switch 303 and close the first switch 302. As described above with reference to Figure 2, this defines the end of a low-side switch half cycle and the beginning of a high-side half cycle. In the same way as described above, the logic 313 can wait for a delay period between opening the second switch 303 and closing the first switch 302 in order to implement a non-overlap delay between the two switching operations.

The controller 301 also includes a first current comparator 314 and a second current comparator 315. The first current comparator 314 compares the measured current signal (Iprim) 306 with a positive current threshold (Iend_pos). The second current comparator 315 compares the measured current signal (Iprim) 306 with a negative current threshold (Iend_neg).

As described above, in some examples the logic 313 can use the output signals of the first and second current comparators 314, 315 for setting the values of the first switch control signal (HS) 311 and the second switch control signal (LS) 312. The positive current threshold (Iend_pos) is a positive value that represents a minimum acceptable value for the resonant current at the end of a high-side switch half cycle. The negative current threshold (Iend_neg) is a negative value that represents a minimum acceptable value for the resonant current at the end of a low-side switch half cycle. Therefore, if the measured current signal (Iprim) 306 drops below the positive current threshold (Iend_pos) at the end of a high-side switch half cycle, then the logic 313 will open the first switch 302 and close the second switch 303 in order to define the end of the high-side switch half cycle. Similarly, if the measured current signal (Iprim) 306 exceeds the negative current threshold (Iend_neg) at the end of a low-side switch half cycle, then the logic 313 will open the second switch 303 and close the first switch 302 in order to define the end of the low-side switch half cycle. In this way, the resonant converter 300 is controlled based on the level of the measured current signal (Iprim) 306 and not the level of the measured voltage signal (Vcap) 307. That is: in response to the measured current signal (Iprim) 306 dropping below the positive current threshold value (Iend_pos) at the end of a high-side switch half cycle, the controller 301 opens the first switch 302 and closes the second switch 303; and in response to the measured current signal (Iprim) 306 exceeding the negative current threshold value (Iend_neg) at the end of a low-side switch half cycle, the controller 301 opens the second switch 303 and closes the first switch 302.

However, as discussed above, control of the resonant converter 300 based on the level of the measured current signal (Iprim) 306 can be disadvantageous in some applications. As we will now describe, the controller 301 of Figures 3a and 3b can advantageously adjust the levels of the upper and lower voltage threshold values (VCRH, VCRL) such that the controller 301 will cause the resonant converter 300 to transition from being controlled based on the level of the measured current signal (Iprim) 306 to being controlled based on the level of the measured voltage signal (Vcap) 307.

In Figure 3b, the logic 313 sets a power reduction mode as either active or inactive, and provides a mode signal 316 that represents the power reduction mode. The logic 313 sets the power reduction mode as active if either or both: i) the measured current signal (Iprim) 306 is less than the positive current threshold (Iend_pos) at the end of the preceding high-side switch half cycle; and ii) the measured current signal (Iprim) 306 is greater than the negative current threshold (Iend_neg) at the end of the preceding low-side switch half cycle. That is, the logic 313 sets the mode signal 316 as representative of "active" when the resonant converter 300 is controlled based on the level of the measured current signal (Iprim) 306 for the last switching cycle. As will be discussed below, such a mode signal 316 is used to reduce the deltaV between the upper and lower voltage threshold values (VCPH, VCRL) and thereby also reduce the power level at the output terminals of the resonant converter 300.

The logic 313 sets the power reduction mode as inactive if both: i) the measured current signal is not less than the positive current threshold at the end of the preceding high-side switch half cycle; and ii) the measured current signal is not greater than the negative current threshold at the end of the preceding low-side switch half cycle. That is, the logic 313 sets the mode signal 316 as representative of "inactive" when the resonant converter 300 is controlled based on the level of the measured voltage signal (Vcap) 307 for the last switching cycle. As will be discussed below, such a mode signal 316 is used to potentially increase the deltaV between the upper and lower voltage threshold values (VCPH, VCRL) and thereby also potentially increase the power level at the output terminals of the resonant converter 300.

In this way, the power reduction mode can be defined as active as result of at least one of the following events occurring over a full switching cycle:

- Iprim < Iend_pos occurring during the high-side switch half cycle; or
- Iprim > Iend_neg occurring during the low-side switch half cycle.

Alternatively, the power reduction mode can be defined as active as result of at least one of the following events occurring for each half cycle:

- Iprim < Iend_pos occurring during the high-side switch half cycle; or
- Iprim > Iend_neg occurring during the low-side switch half cycle.

These conditions can be satisfied at the beginning of each half cycle, and therefore the Iend control mechanism can include features to only check for the condition at the end of a half cycle. This can be implemented by first checking that the condition disappears at the beginning of each half cycle, and then checking for it to be subsequently satisfied, which will be at the end of the half cycle.

That is, the logic block 313 can generate the mode signal 316 as indicative of one or two sided Iend control having occurred during the last switching cycle.

The mode signal 316 is received as an input signal by a regulator block (RL) 317. The regulator block (RL) 317 provides a reduced power signal (Pr) 318 to a power algorithm block (PA) 319. The power algorithm block (PA) 319 sets the value of detaV (as represented by the Pv signal 320 in Figure 3b) based on the lower of: i) the reduced power signal (Pr) 318; and ii) the power setting signal (Ps) 308. A control power device (CPD) 321 receives the Pv signal 320 from the power algorithm block (PA) 319, and sets the values of the upper voltage threshold value (Vcaph / VCRH) and the lower voltage threshold value (Vcapl / VCRL) that are provided to the first and second voltage comparators 309, 310.

In this way, when the requested power level for the load (as represented by the power setting signal (Ps) 308) results in upper and lower voltage threshold values (VCRH, VCRL) that cannot be achieved by the measured voltage signal (Vcap) 307 (and therefore the outputs of the first and second current comparators 314, 315 set the values of the first and second switch control signals (HS, LS) 311, 312), the upper and lower voltage threshold values (VCRH, VCRL) can be defined based on the reduced power signal (Pr) 318 such that the resonant converter 300 will be controlled based on the level of the measured voltage signal (Vcap) 307. In this way, any control of the resonant converter 300 based on the level of the measured current signal (Iprim) 306 will be only temporary.

In other words, the power algorithm block (PA) 319 generates a signal, Pv, 320 as function of the power feedback from the main regulation loop (power setting signal (Ps) 308) and a capacitive mode limit function (as implemented by the regulator block (RL) 317 that provides the reduced power signal (Pr) 318 as an input for the power algorithm block (PA) 319). Then the power algorithm block (PA) 319 is configured to take the minimum of Ps 308 and Pr 319 such that Pr 319 can take over if Ps 319 results in Iend control occurring for at least one of the half cycles.

This functionality is achieved by the regulator (PL) 317 appropriately setting the value of the reduced power signal (Pr) 318, as follows. While the mode signal 316 indicates that the power reduction mode is active, the regulator (RL) 317 gradually decreases the value of the reduced power signal (Pr) 318. In this way, while the resonant converter 300 is being controlled based on the level of the measured current signal (Iprim) 306 the level of the reduced power signal (Pr) 318 will be decreased. This will continue until the reduced power signal (Pr) 318 reaches a sufficiently low level such that the upper and lower voltage threshold values (VCPH, VCRL) are brought close enough together (i.e., the value of deltaV is reduced) so that the resonant converter 300 can be controlled based on the level of the measured voltage signal (Vcap) 307 again.

While the mode signal 316 indicates that the power reduction mode is inactive, the regulator (RL) 317 gradually increases the value of the reduced power signal (Pr) 318. This gradual increase continues at least until the reduced power signal (Pr) 318 is greater than the power setting signal (Ps) 308.

The gradual reduction and increase of the value of the reduced power signal (Pr) 318 can be expressed as a certain percentage of the nominal output power per unit time. In one example, it can be expressed as V/s (volts per second) because the signal unit can be in volts. The rate at which the power is adjusted can relate to one or more of three requirements:

1) the reduction should be smaller than the dynamics of the resonant tank itself. The resonant trajectory can converge to a new operating point within 3-5 switching cycles, for example. Also, if the switching frequency is around 100-200khz (5-10us) then a good value for reducing the power could be a 5% of full load power reduction per 5 switching cycles. This equates to roughly 5%/50us = 100% per ms.

2) the system should be able to recover to a normal operating condition after the situation that caused the reduction in power has disappeared. Such a situation can be a mains dip, which can last approximately 20ms. So, if we assume that the system recovers in 1ms, then it should be able to increase the power within this 1ms. Assuming 25% of the power was lost, we need to increase 25% of full load in 1ms.

3) the amount of irregular behaviour can be limited to an acceptable value. The mechanisms described herein can be considered as a form of on / off control, which can cause some irregularities. By ensuring that the rate of increase and the rate of decrease are not too high, the likelihood of irregular behaviour can be limited to an acceptable value. The rates that are identified above can satisfy this requirement.

In one implementation, while the power reduction mode is inactive, the regulator (RL) 317 gradually increases the value of the reduced power signal (Pr) 318 until the reduced power signal (Pr) is a predetermined amount greater than the power setting signal (Ps) 308. This predetermined amount can be a predetermined proportion of the power setting signal (Ps) 308, or it can be a predetermined absolute amount greater than the power setting signal (Ps) 308. The regulator (RL) 317 can then maintain the value of the reduced power signal (Pr) 318 at the predetermined amount greater than the power setting signal (Ps) 308 until the power reduction mode becomes active.

In this way, the reduced power signal (Pr) 318 tracks the power setting signal (Ps) 308. This can be considered as implementing a primary signal and a replica function, which can limit the effect of the variable that is not in control (i.e., the reduced power signal (Pr) 318) drifting away. That is, when the reduced power signal (Pr) 318 increases to a value that is greater than the power setting signal (Ps) 308, the action could be to set the reduced power signal (Pr) 318 as a function of the power setting signal (Ps) 308. For instance, by controlling the reduced power signal (Pr) 318 such that it follows the power setting signal (Ps) 308 at a short distance. This can reduce the likelihood of unnecessary power overshoots during dynamic situations.

In this example, while the power reduction mode is active, the regulator (RL) 317 gradually decreases the value of the reduced power signal (Pr) 318 at a first rate of change. While the power reduction mode is inactive, the regulator (RL) 317 gradually increases the value of the reduced power signal (Pr) 318 at a second rate of change. The first rate of change is higher than the second rate of change, such that the value of the reduced power signal (Pr) 318 is reduced relatively quickly such that the resonant converter 300 is operated with Iend control for only a relatively short period of time, yet the value of the reduced power signal (Pr) 318 increases more slowly such that operation of the resonant converter 300 is gradually released back to Vcap control.

In this way, the controller 300 can reduce the reduced power signal (Pr) 318 with a predefined rate if mode=active, and it can increase the reduced power signal (Pr) 318 with a different predefined rate if mode=inactive.

In the example of Figure 3b, the logic block 313 optionally generates a symmetry signal (sym) 322 that is related to the duty cycle of the switching of the high-side switch and low-side switch half cycles. The control power device (CPD) block 321 can adjust the values of the upper voltage threshold value (Vcaph / VCRH) and / or the lower voltage threshold value (Vcapl / VCRL) based on the symmetry signal (sym) 322 in order to bring the duty cycle closer to 50%, if it is not at 50%. In another example, the controller 301 can adapt the DC component of Vcap based on the symmetry signal (sym) 322 in order to bring the duty cycle closer to 50%.

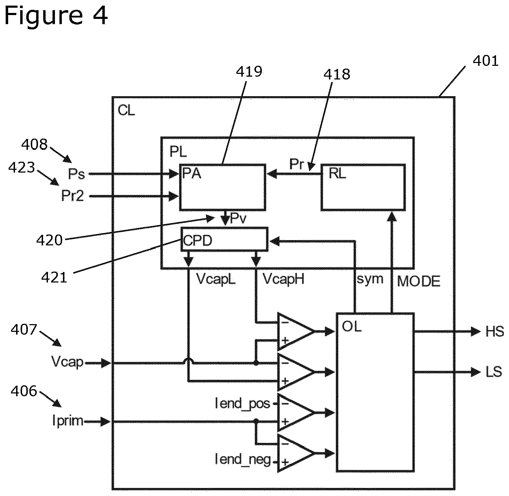

Figure 4 shows another example embodiment of a controller 401 according to the present disclosure. Features of the controller 401 of Figure 4 that are also shown in Figure 3b will not necessarily be described again here.

The controller 401 of Figure 4 also receives a protected power signal (Pr2) 423, which defines a power level that is based (directly or indirectly) on a time delay between a change in state of one of the switches and a subsequent zero-crossing of the measured current signal (Iprim) 406. More particularly, a power algorithm block (PA) 419 receives the protected power signal (Pr2) 423 along with the reduced power signal (Pr) 418 and the power setting signal (Ps) 408 that are described above with reference to Figure 3b. It will be appreciated that the system can be extended with one or more additional protected power signal (e.g., Pr3, Pr4, etc.) such that the controller 401 can incorporate additional cases where the resonant circuit should be reduced in power.

The power algorithm block (PA) 419 then sets the value of deltaV (as represented by the Pv signal 420) such that the control power device (CPD) block 421 sets the upper voltage threshold value (VcapH) and the lower threshold value (VcapL) based on the lower of: i) the reduced power signal (Pr) 418; ii) the power setting signal (Ps) 408; and iii) the protected power signal (Pr2) 423. In this way, as will be discussed below, another mechanism is introduced for overruling the power setting signal (Ps) 408 by reducing the difference between the upper voltage threshold value (VcapH) and the lower threshold value (VcapL) in order to improve the performance of the resonant converter.

In this example, the protected power signal (Pr2) 423 corresponds to a power level at which the measured voltage signal (Vcap) 407 will intersect: the upper voltage threshold value (VcapH) during the high-side switch half cycle; and the lower voltage threshold value (VcapL) during the low-side switch half cycle. In this way, the protected power signal (Pr2) 423 can control the associated resonant converter based on a detected distance from the capacitive mode border.

The protected power signal (Pr2) 423 can be set such that it corresponds to a detected distance from the capacitive mode border that is larger than the distance defined by the Iend_pos and Iend_neg levels. Therefore, in steady state operation, the reduced power signal (Pr) 418 does not limit the power of the resonant converter when the protected power signal (Pr2) 423 does. During certain transients, it is possible that both the reduced power signal (Pr) 418 and the protected power signal (Pr2) 423 are both set at values that would limit the power (meaning that they are both lower than the power setting signal (Ps) 408).

This use of the protected power signal (Pr2) 423 can limit the energy that is converted per switching cycle by a feedback loop that checks the distance to the capacitive mode limit based on a timing requirement or area under the resonant current graph between the moment that the half cycle is finished and the moment that the resonant current crosses 0. When this distance becomes smaller than a predefined distance, then the deltaV level is reduced thereby taking over the normal feedback loop. In this way, it is possible to limit the power at a certain predefined distance from the capacitive mode point by maintaining the same mechanism of VcapH, VcapL finishing the half cycle. This can have the advantage that no undesired interaction may occur between finishing the half cycle by Iend_pos or Iend_neg during some half cycles and VcapH or VcapL at other half cycles. As indicated above, such switching can lead to irregular switching behaviour and can also cause complications with the symmetry loop because the symmetry loop relies on two-sided Vcap control (i.ee., both half cycles finished by VcapH and VcapL).

In an embodiment, a timeout timer can be started when a capacitive mode reduction condition is detected. Such a timeout timer can be implemented as a counter that counts at the switching frequency (fsw). A capacitive mode reduction condition is one in which the normal regulation loop, which involves setting the upper voltage threshold value (VcapH) and the lower voltage threshold value (VcapL) based on the power setting signal (Ps) 408, is overruled by one or both of the reduced power signal (Pr) 418 and the protected power signal (Pr2) 423. The controller 401 can take remedial action if the timeout timer reaches an end value. For example, it can decide to restart, latch or keep operating. The timeout timer can implement a protection time, which can be configurable by a user. Therefore, the end value can be considered as a configurable delay. If the controller leaves a power reduction mode before the timeout timer reaches the end value, then it is automatically reset.

One or more of the controllers described herein can also include a switching mode detector (not shown in the drawings). Such a switching mode detector can detect whether or not the first and second switches are being controlled based on Vcap threshold(s) / monitoring. That is, whether or not it is the output signals of the first and second voltage comparators 309 that cause the change in state of the first and second switch control signals (HS, LS). In some applications, this information is available from a switching state machine that knows what control signal switches on and off the gate drivers. In some examples, the controller can also set the power reduction mode as active if the switching mode detector detects that the first and second switches are not being controlled based on Vcap threshold(s) / monitoring. Other switching modes that can be used by the controllers described herein include: over current conditions; and maximum on-time operation. The switching mode detector could also detect the reduced power signal (Pr) that is described herein.

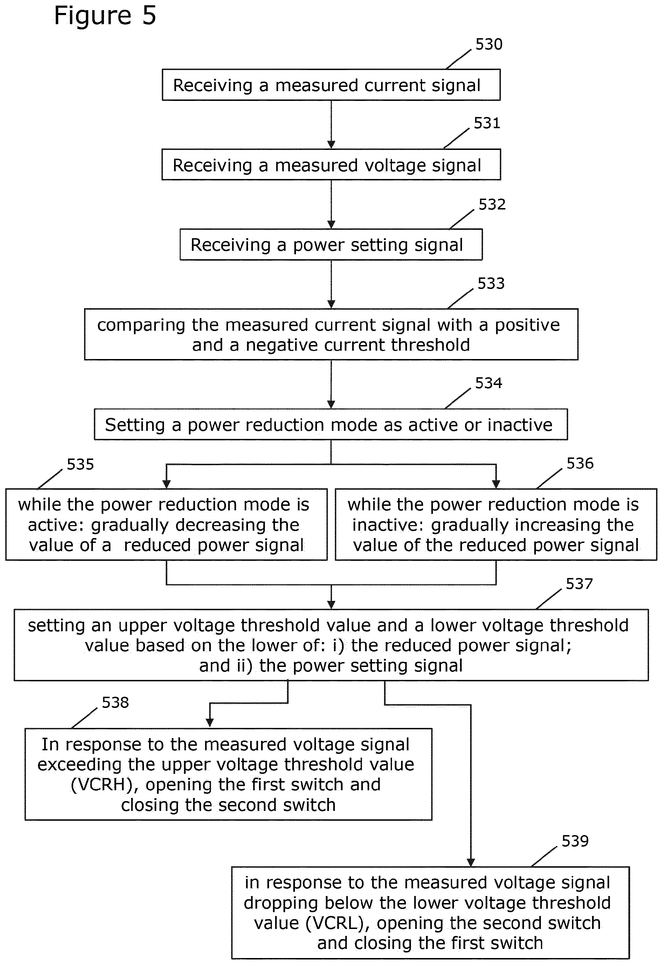

Figure 5 shows an example embodiment of a method of operating a resonant converter according to the present disclosure.

The resonant converter is for supplying electrical energy from a supply source to a load, and (as described in detail above) it comprises: a first switch and a second switch connected in series with each other between the supply source and a reference terminal, wherein the resonant converter has a high-side switch half cycle when the first switch is closed and the second switch is open, and wherein the resonant converter has a low-side switch half cycle when the first switch is open and the second switch is closed; and a resonant tank that is electrically connected to the first and second switches, wherein the resonant tank comprises a resonant capacitor.

At step 530, the method includes receiving a measured current signal (Iprim) that represents the current flowing in the resonant tank, and at step 531 the method includes receiving a measured voltage signal (Vcap) that represents the voltage at a predetermined point in the resonant tank.

At step 532, the method includes receiving a power setting signal (Ps), which defines a requested power level for the load.

At step 533, the method compares the measured current signal (Iprim) with a positive current threshold and also compares the measured current signal (Iprim) with a negative current threshold.

At step 534, the method involves setting a power reduction mode as:

- active if either or both:

    the measured current signal is less than the positive current threshold at the end of the preceding high-side switch half cycle; and
    the measured current signal is greater than the negative current threshold at the end of the preceding low-side switch half cycle; or

- inactive if both:

    the measured current signal is not less than the positive current threshold at the end of the preceding high-side switch half cycle; and
    the measured current signal is not greater than the negative current threshold at the end of the preceding low-side switch half cycle;

While the power reduction mode is active: at step 535, the method involves gradually decreasing the value of a reduced power signal.

While the power reduction mode is inactive: at step 536, the method involves gradually increasing the value of the reduced power signal

Then, at step 537 the method involves setting an upper voltage threshold value and a lower voltage threshold value based on the lower of: i) the reduced power signal; and ii) the power setting signal.

In response to the measured voltage signal exceeding the upper voltage threshold value, at step 538 the method involves opening the first switch and closing the second switch.

In response to the measured voltage signal dropping below the lower voltage threshold value, at step 539 the method involves opening the second switch and closing the first switch.

Examples disclosed herein relate to a detection of near capacitive mode by primary current crossing a threshold, and using that to overrule the normal power regulation of a resonant converter controlled with capacitor voltage control method by regulating the power down as long as the resonant converter is detected as being near capacitive mode.

Examples disclosed herein relate to a capacitive mode limit for a cycle by cycle controlled resonant converter, where the actual switching half cycle is finished by an event being the resonant current getting smaller than a predefined distance to 0, and where the momentary power of the converter is reduced based on finishing the half cycle by the same event.

One or more of the examples disclosed herein can be used in resonant converters for laptop adapters, PC (personal computer) power supplies, televisions, solar power converters, onboard charger systems for cars, etc..

Key features of examples of the present disclosure include one or more of the following:

1. A resonant converter controller including a capacitive mode protection based on the Iend control mechanism

2. A regulation loop that regulates back the power level (via a deltaV reduction in a direction of generating lower power) based on single or both sides Iend crossing detected.

3. The power is regulated up based on no Iend crossing detected.

4. A regulated capacitive mode limit capable of maintaining a predefined distance to the Iend crossing.

Feature 4 ensures stable jitter-free operation, which can be desired. As a result of feature 4, the switching frequency can increase and stable jitter-free operation can be achieved at both sided Vcap control at a stable maximum possible power.

Examples disclosed herein can detect at least one side Iend control, and using that detection to regulate back deltaV. However, in some applications this can cause irregularities if some half cycles are finished in response to Iprim crossing Iend_pos or Iend_neg, while other half cycles are finished in response to Vcap crossing Vcaph or Vcapl. One or more of the examples described herein reduce such irregularities, which are undesirable.

For implementations where no symmetry loop is required (for example when the resonant capacitor voltage is sensed when the resonant capacitor is placed between node HB and the transformer), examples disclosed herein can control the resonant converter with a reduced risk of an asymmetrical hangup situation.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A controller for a resonant converter, wherein the resonant converter is for supplying electrical energy from a supply source to a load, the resonant converter comprising:

   a first switch and a second switch connected in series with each other between the supply source and a reference terminal, wherein the resonant converter has a high-side switch half cycle when the first switch is closed and the second switch is open, and wherein the resonant converter has a low-side switch half cycle when the first switch is open and the second switch is closed;
   a resonant tank that is electrically connected to the first and second switches, wherein the resonant tank comprises a resonant capacitor;

   wherein the controller is configured to:

   receive a measured current signal that represents the current flowing in the resonant tank;
   receive a measured voltage signal that represents the voltage at a predetermined point in the resonant tank;
   receive a power setting signal, which defines a requested power level for the load;
   compare the measured current signal with a positive current threshold;
   compare the measured current signal with a negative current threshold;
   set a power reduction mode as active if either or both:

      the measured current signal is less than the positive current threshold at the end of the preceding high-side switch half cycle; and
      the measured current signal is greater than the negative current threshold at the end of the preceding low-side switch half cycle;

   set the power reduction mode as inactive if both:

      the measured current signal is not less than the positive current threshold at the end of the preceding high-side switch half cycle; and
      the measured current signal is not greater than the negative current threshold at the end of the preceding low-side switch half cycle;

   while the power reduction mode is active: gradually decrease the value of a reduced power signal;
   while the power reduction mode is inactive: gradually increase the value of the reduced power signal;
   set an upper voltage threshold value and a lower voltage threshold value based on the lower of: i) the reduced power signal; and ii) the power setting signal;
   in response to the measured voltage signal exceeding the upper voltage threshold value, open the first switch and close the second switch;
   in response to the measured voltage signal dropping below the lower voltage threshold value, open the second switch and close the first switch.

2. The controller of claim 1, wherein the controller is configured to:
   while the power reduction mode is inactive: gradually increase the value of the reduced power signal until the reduced power signal is greater than the power setting signal.

3. The controller of claim 1 or claim 2, wherein the controller is configured to:
   while the power reduction mode is inactive: gradually increase the value of the reduced power signal until the reduced power signal is a predetermined amount greater than the power setting signal.

4. The controller of claim 1 or claim 2, wherein the controller is configured to:
   while the power reduction mode is inactive:

gradually increase the value of the reduced power signal until the reduced power signal is a predetermined amount greater than the power setting signal; and

maintain the value of the reduced power signal at the predetermined amount greater than the power setting signal until the power reduction mode becomes active.

5.  The controller of claim 4, wherein:
the predetermined amount is either: a predetermined proportion of the power setting signal; or a predetermined absolute amount greater than the power setting signal.

6.  The controller of any preceding claim, further comprising a timeout timer, wherein the controller is configured to:

start the timeout timer when the power reduction mode is active; and
take remedial action if the timeout timer reaches an end value.

7.  The controller of any preceding claim wherein the controller is configured to:

while the power reduction mode is active: gradually decrease the value of the reduced power signal at a first rate of change;
while the power reduction mode is inactive: gradually increase the value of the reduced power signal at a second rate of change; and
wherein the first rate of change is higher than the second rate of change.

8.  The controller of any preceding claim, wherein the controller is further configured to:

in response to the measured current signal dropping below the positive current threshold value at the end of a high-side switch half cycle, open the first switch and close the second switch;
in response to the measured current signal exceeding the negative current threshold value at the end of a low-side switch half cycle, open the second switch and close the first switch.

9.  The controller of any preceding claim, wherein the controller is configured to:
in response to the measured voltage signal exceeding the upper voltage threshold value, open the first switch, wait for a delay period, and then close the second switch.

10. The controller of any preceding claim, wherein the controller is configured to:
in response to the measured voltage signal dropping below the lower voltage threshold value, open the second switch, wait for a delay period, and then close the first switch.

11. The controller of any preceding claim, wherein the controller is further configured to:

receive a protected power signal, which defines a power level that is based on a time delay between a change in state of one of the switches and a subsequent zero-crossing of the measured current signal; and
set the upper voltage threshold value and the lower threshold value based on the lower of: i) the reduced power signal; ii) the power setting signal; and iii) the protected power signal.

12. The controller of claim 11, wherein the protected power signal corresponds to a power level at which the measured voltage signal will intersect: the upper voltage threshold value during the high-side switch half cycle; and the lower voltage threshold value during the low-side switch half cycle.

13. A resonant converter comprising the controller of any preceding claim.

14. A method of operating a resonant converter, wherein the resonant converter is for supplying electrical energy from a supply source to a load, the resonant converter comprising:

a first switch and a second switch connected in series with each other between the supply source and a reference terminal, wherein the resonant converter has a high-side switch half cycle when the first switch is closed and the second switch is open, and wherein the resonant converter has a low-side switch half cycle when the first switch is open and the second switch is closed; and
a resonant tank that is electrically connected to the first and second switches, wherein the resonant tank comprises a resonant capacitor;

wherein the method comprises:

receiving a measured current signal that represents the current flowing in the resonant tank;
receiving a measured voltage signal that represents the voltage at a predetermined point in the resonant tank;
receiving a power setting signal, which defines a requested power level for the load;
comparing the measured current signal with a positive current threshold;
comparing the measured current signal with a negative current threshold;
setting a power reduction mode as active if either or both:

the measured current signal is less than the positive current threshold at the end of the preceding high-side switch half cycle; and
the measured current signal is greater than the negative current threshold at the end of the preceding low-side switch half cycle;

setting the power reduction mode as inactive if both:

the measured current signal is not less than the positive current threshold at the end of the preceding high-side switch half cycle; and
the measured current signal is not greater than the negative current threshold at the end of the preceding low-side switch half cycle;

while the power reduction mode is active: gradually decreasing the value of a reduced power signal;
while the power reduction mode is inactive: gradually increasing the value of the reduced power signal;
setting an upper voltage threshold value and a lower voltage threshold value based on the lower of: i) the reduced power signal; and ii) the power setting signal;
in response to the measured voltage signal exceeding the upper voltage threshold value, opening the first switch and closing the second switch;
in response to the measured voltage signal dropping below the lower voltage threshold value, opening the second switch and closing the first switch.

**Amended claims in accordance with Rule 137(2) EPC.**

1. A controller (301) for a resonant converter (300), wherein the resonant converter is for supplying electrical energy from a supply source to a load, the resonant converter comprising:

a first switch (302) and a second switch (303) connected in series with each other between the supply source (304) and a reference terminal (305), wherein the resonant converter has a high-side switch half cycle when the first switch is closed and the second switch is open, and wherein the resonant converter has a low-side switch half cycle when the first switch is open and the second switch is closed;
a resonant tank that is electrically connected to the first and second switches, wherein the resonant tank comprises a resonant capacitor; wherein the controller is configured to:
receive a measured current signal (306) that represents the current flowing in the resonant tank;
receive a measured voltage signal (307) that represents the voltage at a predetermined point in the resonant tank;
receive a power setting signal (308, Ps), which defines a requested power level for the load;
compare the measured current signal with a positive current threshold (Iend_pos);
compare the measured current signal with a negative current threshold (Iend_neg);
set a power reduction mode (316) as active if either or both:

the measured current signal is less than the positive current threshold at the end of the preceding high-side switch half cycle; and
the measured current signal is greater than the negative current threshold at the end of the preceding low-side switch half cycle;

set the power reduction mode as inactive if both:

the measured current signal is not less than the positive current threshold at the end of the preceding high-side switch half cycle; and
the measured current signal is not greater than the negative current threshold at the end of the preceding low-side switch half cycle;

while the power reduction mode is active: gradually decrease the value of a reduced power signal (318, Pr);
while the power reduction mode is inactive: gradually increase the value of the reduced power signal;
set an upper voltage threshold value (VCRH) and a lower voltage threshold value (VCPL) based on the lower of: i) the reduced power signal; and ii) the power setting signal;
in response to the measured voltage signal exceeding the upper voltage threshold value, open the first switch and close the second switch;
in response to the measured voltage signal dropping below the lower voltage threshold value, open the second switch and close the first switch.

2. The controller of claim 1, wherein the controller is configured to:

while the power reduction mode is inactive: gradually increase the value of the reduced power signal until the reduced power signal is greater than the power setting signal.

3. The controller of claim 1 or claim 2, wherein the controller is configured to:
while the power reduction mode is inactive: gradually increase the value of the reduced power signal until the reduced power signal is a predetermined amount greater than the power setting signal.

4. The controller of claim 1 or claim 2, wherein the controller is configured to:
while the power reduction mode is inactive:

gradually increase the value of the reduced power signal until the reduced power signal is a predetermined amount greater than the power setting signal; and
maintain the value of the reduced power signal at the predetermined amount greater than the power setting signal until the power reduction mode becomes active.

5. The controller of claim 4, wherein:
the predetermined amount is either: a predetermined proportion of the power setting signal; or a predetermined absolute amount greater than the power setting signal.

6. The controller of any preceding claim, further comprising a timeout timer, wherein the controller is configured to:

start the timeout timer when the power reduction mode is active; and
take remedial action if the timeout timer reaches an end value.

7. The controller of any preceding claim wherein the controller is configured to:

while the power reduction mode is active: gradually decrease the value of the reduced power signal at a first rate of change;
while the power reduction mode is inactive: gradually increase the value of the reduced power signal at a second rate of change; and
wherein the first rate of change is higher than the second rate of change.

8. The controller of any preceding claim, wherein the controller is further configured to:

in response to the measured current signal dropping below the positive current threshold value at the end of a high-side switch half cycle, open the first switch and close the second switch;
in response to the measured current signal exceeding the negative current threshold value at the end of a low-side switch half cycle, open the second switch and close the first switch.

9. The controller of any preceding claim, wherein the controller is configured to:
in response to the measured voltage signal exceeding the upper voltage threshold value, open the first switch, wait for a delay period, and then close the second switch.

16

10. The controller of any preceding claim, wherein the controller is configured to:
in response to the measured voltage signal dropping below the lower voltage threshold value, open the second switch, wait for a delay period, and then close the first switch.

11. The controller of any preceding claim, wherein the controller is further configured to:

receive a protected power signal (423, Pr2), which defines a power level that is based on a time delay between a change in state of one of the switches and a subsequent zero-crossing of the measured current signal; and set the upper voltage threshold value and the lower threshold value based on the lower of: i) the reduced power signal; ii) the power setting signal; and iii) the protected power signal.

12. The controller of claim 11, wherein the protected power signal corresponds to a power level at which the measured voltage signal will intersect: the upper voltage threshold value during the high-side switch half cycle; and the lower voltage threshold value during the low-side switch half cycle.

13. A resonant converter comprising the controller of any preceding claim.

14. A method of operating a resonant converter (300), wherein the resonant converter is for supplying electrical energy from a supply source to a load, the resonant converter comprising:

a first switch (302) and a second switch (303) connected in series with each other between the supply source (304) and a reference terminal (305), wherein the resonant converter has a high-side switch half cycle when the first switch is closed and the second switch is open, and wherein the resonant converter has a low-side switch half cycle when the first switch is open and the second switch is closed; and
a resonant tank that is electrically connected to the first and second switches, wherein the resonant tank comprises a resonant capacitor; wherein the method comprises:

receiving a measured current signal (306) that represents the current flowing in the resonant tank;
receiving a measured voltage signal (307) that represents the voltage at a predetermined point in the resonant tank;
receiving a power setting signal (308, Ps), which defines a requested power level for the load;
comparing the measured current signal with a positive current threshold (Iend_pos);
comparing the measured current signal with a negative current threshold (Iend_neg);
setting a power reduction mode (316, Pr) as active if either or both:

the measured current signal is less than the positive current threshold at the end of the preceding high-side switch half cycle; and
the measured current signal is greater than the negative current threshold at the end of the preceding low-side switch half cycle;

setting the power reduction mode as inactive if both:

the measured current signal is not less than the positive current threshold at the end of the preceding high-side switch half cycle; and
the measured current signal is not greater than the negative current threshold at the end of the preceding low-side switch half cycle;

while the power reduction mode is active: gradually decreasing the value of a reduced power signal (318, Pr);
while the power reduction mode is inactive: gradually increasing the value of the reduced power signal;
setting an upper voltage threshold value (VCRH) and a lower voltage threshold value (VCPL) based on the lower of: i) the reduced power signal; and ii) the power setting signal;
in response to the measured voltage signal exceeding the upper voltage threshold value, opening the first switch and closing the second switch;
in response to the measured voltage signal dropping below the lower voltage threshold value, opening the second switch and closing the first switch.

Figure 1

## Figure 2

EP 4 546 634 A1

Switches driven by charge difference between beginning and end of halfcycle

# Figure 2 (continued)

## Figure 3a

## Figure 3b

# Figure 4

## Figure 5

530

Receiving a measured current signal

531

Receiving a measured voltage signal

532

Receiving a power setting signal

533

comparing the measured current signal with a positive
and a negative current threshold

534

Setting a power reduction mode as active or inactive

535

while the power reduction mode is
active: gradually decreasing the
value of a reduced power signal

536

while the power reduction mode is
inactive: gradually increasing the
value of the reduced power signal

537

setting an upper voltage threshold value and a lower voltage threshold
value based on the lower of: i) the reduced power signal;
and ii) the power setting signal

538

In response to the measured voltage signal
exceeding the upper voltage threshold value
(VCRH), opening the first switch and
closing the second switch

539

in response to the measured voltage signal
dropping below the lower voltage threshold
value (VCRL), opening the second switch
and closing the first switch

# EUROPEAN SEARCH REPORT

Europäisches Patentamt
European Patent Office
Office européen des brevets

**Application Number**

EP 23 20 5704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/033998 A1 (HALBERSTADT HANS [NL]) 11 February 2010 (2010-02-11) * paragraphs [0028], [0031], [0036] – [0044], [0054], [0059], [0069] – [0072]; figures 2, 3, 4a, 4b * | 1-14 | INV. H02M3/335 H02M3/00 H02M1/32 H02M1/00 |
| A | US 2011/187335 A1 (GRAKIST ALFRED [NL] ET AL) 4 August 2011 (2011-08-04) * figures 1, 2 * | 1-14 | |
| A | US 7 944 716 B2 (NXP BV [NL]) 17 May 2011 (2011-05-17) * column 10; figures 7-9 * | 1-14 | |
| A | US 8 427 847 B2 (HALBERSTADT HANS [NL]; NXP BV [NL]) 23 April 2013 (2013-04-23) * column 2; figure 2 * | 1-14 | |

TECHNICAL FIELDS SEARCHED (IPC)

H02M

The present search report has been drawn up for all claims

| Place of search | Date of completion of the search | Examiner |
|---|---|---|
| The Hague | 21 March 2024 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 546 634 A1

## ANNEX TO THE EUROPEAN SEARCH REPORT
## ON EUROPEAN PATENT APPLICATION NO.

EP 23 20 5704

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2024

| Patent document cited in search report | | | Publication date | Patent family member(s) | | | Publication date |
|---|---|---|---|---|---|---|---|
| US 2010033998 | A1 | | 11-02-2010 | CN | 101164221 | A | 16-04-2008 |
| | | | | EP | 1869758 | A1 | 26-12-2007 |
| | | | | JP | 2008535455 | A | 28-08-2008 |
| | | | | US | 2010033998 | A1 | 11-02-2010 |
| | | | | WO | 2006103606 | A1 | 05-10-2006 |
| US 2011187335 | A1 | | 04-08-2011 | CN | 101803164 | A | 11-08-2010 |
| | | | | EP | 2201669 | A1 | 30-06-2010 |
| | | | | US | 2011187335 | A1 | 04-08-2011 |
| | | | | WO | 2009037613 | A1 | 26-03-2009 |
| US 7944716 | B2 | | 17-05-2011 | EP | 1869759 | A2 | 26-12-2007 |
| | | | | JP | 2008535456 | A | 28-08-2008 |
| | | | | US | 2008266908 | A1 | 30-10-2008 |
| | | | | WO | 2006103609 | A2 | 05-10-2006 |
| US 8427847 | B2 | | 23-04-2013 | CN | 102257714 | A | 23-11-2011 |
| | | | | EP | 2380268 | A1 | 26-10-2011 |
| | | | | US | 2011242856 | A1 | 06-10-2011 |
| | | | | WO | 2010073196 | A1 | 01-07-2010 |

EPO FORM P0459

For more details about this annex : see Official Journal of the European Patent Office, No. 12/82